Europäisches Patentamt

European Patent Office

Office européen des brevets

(11) Veröffentlichungsnummer: **0 314 114**
**A1**

## EUROPÄISCHE PATENTANMELDUNG

(21) Anmeldenummer: **88117863.6**

(22) Anmeldetag: **26.10.88**

(51) Int. Cl.⁴: **B60R 21/00**

(30) Priorität: **27.10.87 DE 3736296**

(43) Veröffentlichungstag der Anmeldung:
**03.05.89 Patentblatt 89/18**

(84) Benannte Vertragsstaaten:
**FR IT SE**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Spies, Hans**
**Schiessstätte 12**
**D-8068 Pfaffenhofen(DE)**
Erfinder: **Laucht, Horst, Dr.**
**Hermann-Löns-Weg 16**
**D-8206 Bruckmühl(DE)**
Erfinder: **Wöhrl, Alfons**
**Sebastian-Kneipp-Strasse 3**
**D-8898 Schrobenhausen(DE)**

(54) **Airbag-Sensor.**

(57) Die Erfindung bezieht sich auf eine Sensorschaltung für ein Kraftfahrzeug, die mit unterschiedlichen Betriebsarten betrieben werden kann und entsprechend dem Betriebszustand des Kraftfahrzeugs seine aktuelle Betriebsart selbsttätig schaltet und die uber eine ständige Verbindung mit der Kraftfahrzeug-Batterie und/oder mit einer eigenen Batterie dauernd unter Spannung steht, und auch längere Spannungseinbrüche problemlos überbrükken kann.

EP 0 314 114 A1

## Sensorschaltung

Die Erfindung bezieht sich auf eine Sensorschaltung für ein Kraftfahrzeug gemäß dem Gattungsbegriff des Anspruchs 1.

Elektronische Sensorschaltungen sind in den verschiedensten Ausführungen - auch durch die Anmelderin - bekannt geworden. Als Beispiel sei der Gegenstand des US-PS 43 81 829 angeführt. Diese Sensorschaltungen nach dem Stand der Technik sind mit Prüfeinrichtungen ausgestattet, die das gesamte System einer ständigen Überwachung unterziehen. Hierbei wird nach Einschaltung der Zündung des Kraftfahrzeugs gleichzeitig die Sensorschaltung und ein umfangreicher Prüfzyklus für das passive Sicherheitssystem aktiviert, dessen Ergebnis dem Fahrer angezeigt wird.

Diese Sensorschaltungen sind jedoch nur dann aktiv, wenn die Zündung des Kraftfahrzeugs eingeschaltet ist. Der Betriebszustand dieser Sensorschaltungen richtet sich also nicht direkt nach dem Betriebszustand des Kraftfahrzeugs.

Der vorliegenden Erfindung liegt die Aufgabe zugrunde, eine Sensorschaltung der eingangs genannten Art zu schaffen, die in der Lage ist, das umfangreiche Prüfprogramm mit Ergebnisanzeige selbsttätig durchzuführen, sobald das Kraftfahrzeug in Betrieb genommen wird, auch wenn sie ständig an die Spannungsversorgung angeschlossen ist.

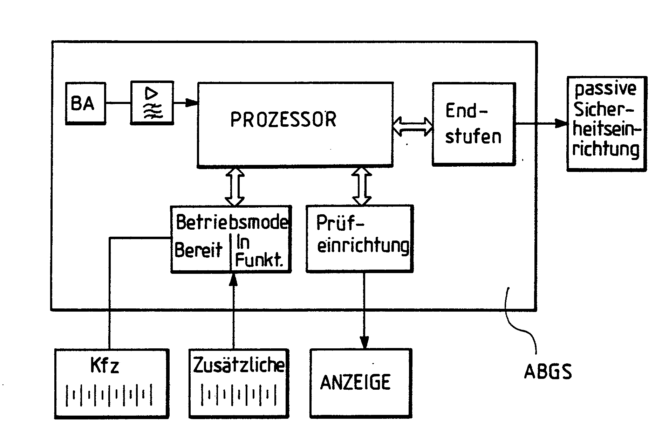

Diese Aufgabe wird durch die im Anspruch 1 aufgezeigten Maßnahmen gelöst. In den Unteransprüchen sind Weiterbildungen und Ausgestaltungen angegeben und in der nachfolgenden Beschreibung sind Ausführungsbeispiele erläutert. Die einzige Figur der Zeichnung zeigt ein Blockschaltbild eines Ausführungsbeispiels in schematischer Darstellung.

Das in der Zeichnung skizzierte Ausführungsbeispiel zeigt eine Sensorschaltung, die mit einem Beschleunigungssensor ausgerüstet ist, dessen Signal über einen Verstärker mit Filterstufe dem Prozessor zur Auswertung und Weiterverarbeitung zugeführt wird.

Diese Sensorschaltung ist nun ständig über die Betriebsartauswahlschaltung an die Fahrzeugbatterie zur Spannungsversorgung angeschlossen und für mindestens zwei Betriebsarten vorgesehen. In dem gezeigten Beispiel handelt es sich um die Betriebsarten "Bereitschaft" und "In-Funktion". Die jeweils zweckmäßige Betriebsart wird durch die von dem Beschleunigungsaufnehmer aufgenommenen typischen Vibrationen bei Motorlauf und/oder Fahren selbständig eingeschaltet. Nach dem Erkennen des Betriebszustandes "In-Funktion", d.h. "motor an" oder "fahren", erfolgt die Aktivierung bzw. der Start des umfangreichen Prüfzyklus durch die Prüfeinrichtung, die mittels der Anzeigeeinrichtung dem Fahrer Aufschluß über den Zustand des gesamten Sicherheitssystems gibt.

In der Betriebsart-Stellung "Bereitschaft" sind nur die Betriebsartauswahlschaltung, der in die Sensorschaltung integrierte Beschleunigungssensor und die Auswertelogik für die Vibrationen in dem Mikroprozessor in Betrieb, d.h. stehen unter Spannung. Beim selbsttätigen Umschalten der Betriebsart "In-Funktion" auf die Betriebsart "Bereitschaft" erfolgt das Umschalten mit einer bestimmten, vorwählbaren Zeitverzögerung nach Beendigung des Vibrationszustandes.

Zur Überbrückung spannungsloser Zeiten, beziehungsweise zur Pufferung von Spannungseinbrüchen in der Energieversorgung - auch von längerer Dauer - wird der Sensorschaltung eine zusätzliche, eigene Spannungsquelle zugeordnet. Vorteilhaft ist es, wenn die Prüfeinrichtung derart konzipiert ist, daß sie auch die Energieversorgung bzw. deren Zustand im Rahmen des Prüfzyklus überwacht und festgestellte Fehler und Mängel mittels der Anzeigeeinrichtung signalisiert. Nun kann es weiterhin vorteilhaft sein, daß die Sensorschaltung bei lang andauernden Spannungseinbrüchen innerhalb der Betriebsart "Bereitschaft" mit einem Schalter zur Selbstabschaltung ausgerüstet ist, um die eigene Spannungsquelle nicht vollständig zu entleeren. Ein Aktivieren erfolgt dann automatisch, wenn die Versorgungsspannung aus der allgemeinen Energieversorgung des Kraftfahrzeugs wieder zur Verfügung steht.

Durch die vorstehend beschriebenen Maßnahmen ist es nun möglich, die Sensorschaltung ständig an die Spannungsversorgung anzuschließen, auch wenn diese unzuverlässig in dem Sinne ist, daß mit länger dauernden Spannungseinbrüchen gerechnet werden muß. Ein typisches Beispiel hierfür ist die Spannungsversorgung über die Hupenleitung ins Lenkrad.

Die vorgeschlagene Konzeption erbringt aber auch dadurch einen zusätzlichen Sicherheitsgewinn, daß die verschiedenen Betriebsarten der Sensorschaltung direkt durch den Betriebszustand des Kraftfahrzeugs gesteuert werden.

## Ansprüche

1. Sensorschaltung für eine passive Sicherheitseinrichtung in einem Kraftfahrzeug, insbesondere für Gaskissen oder Gurtstrammer mit zugeordnetem Beschleunigungssensor, mit einer Auswertschaltung zur Auslösung der passiven Sicherheitseinrichtung und einer Prüfeinrichtung, **da-**

durch gekennzeichnet, daß die Sensorschaltung durch unmittelbaren Anschluß an die Kraftfahrzeug-Batterie ständig mit Spannung versorgt wird und in mindestens zwei unterschiedlichen Betriebsarten - beispielsweise Bereitschaft" und "In-Funktion" - betrieben werden kann, wobei die jeweils zweckmäßige Betriebsart selbsttätig durch Auswertung der bei Motorlauf und/oder Fahrbewegung auftretenden Vibrationen gewählt und dem Fahrer durch die Prüfeinrichtung angezeigt wird.

2. Sensorschaltung nach Anspruch 1, dadurch gekennzeichnet, daß bei Umschaltung auf die Betriebsart "In-Funktion" automatisch ein Prüfzyklus für Sensor und Sicherheitseinrichtung gestartet wird und das Ergebnis dem Fahrer zusammen mit der Betriebsart angezeigt wird.

3. Sensorschaltung nach Anspruch 1 oder 2, dadurch gekennzeichnet, daß in der Betriebsart "Bereitschaft" nur der in die Sensorschaltung integrierte Beschleunigungssensor und die Auswertelogik für die Vibrationen in Betrieb sind.

4. Sensorschaltung nach den Ansprüchen 1 bis 3, dadurch gekennzeichnet, daß das selbständige Umschalten von der Betriebsart "In-Funktion" auf die Betriebsart "Bereitschaft" zeitverzögert nach dem Ausklingen der Motor- oder Fahrvibrationen erfolgt.

5. Sensorschaltung nach den Ansprüchen 1 bis 4, dadurch gekennzeichnet, daß der Sensorschaltung zur Pufferung von Spannungseinbrüchen in der allgemeinen Energieversorgung eine zusätzliche, eigene Energieversorgung zugeordnet ist.

6. Sensorschaltung nach Anspruch 5, dadurch gekennzeichnet, daß die zusätzliche eigene Energieversorgung ebenfalls an den Prüfzyklus von Sensor und Sicherheitseinrichtung angeschlossen ist.

7. Sensorschaltung nach den Ansprüchen 1 bis 6, dadurch gekennzeichnet, daß sich die Schaltung bei Spannungseinbrüchen von längerer Dauer während der Betriebsart "Bereitschaft" nach einer bestimmten, vorgegeben Zeit selbst von der eigenen Energieversorgung abschaltet.

**Europäisches Patentamt**

# EUROPÄISCHER RECHERCHENBERICHT

Nummer der Anmeldung

EP 88 11 7863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | US-A-4 381 829 (MONTARON) <br> * Insgesamt * | 1,4 | B 60 R 21/00 |
| Y | | 5,6 | |
| | --- | | |
| Y | FR-A-2 217 187 (EATON CORP.) <br> * Seite 2, Zeilen 3-23 * | 5,6 | |
| | --- | | |
| A | US-A-3 622 974 (BEST) <br> * Anspruch 2 * | 1 | |
| | ----- | | |

| | RECHERCHIERTE SACHGEBIETE (Int. Cl.4) |
|---|---|
| | B 60 R |

Der vorliegende Recherchenbericht wurde für alle Patentansprüche erstellt

| Recherchenort | Abschlußdatum der Recherche | Prüfer |
|---|---|---|
| DEN HAAG | 17-01-1989 | DUBOIS B.F.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P0403)